# EUROPEAN PATENT APPLICATION

(11) **EP 3 249 730 A1**
(43) Date of publication of application: **29.11.2017**
(21) Application number: 15878953.7
(22) Date of filing: 21.12.2015
(51) Int. Cl.: H01M 8/18

(54) **REDOX-FLOW BATTERY**

(30) Priority: 23.01.2015 JP 2015011848
(71) Applicant: Sumitomo Electric Industries, Ltd., Osaka-shi, Osaka 541-0041 (JP)
(72) Inventor: YAMANISHI, Katsuya, Osaka-shi Osaka 554-0024 (JP); TSUTSUI, Yasumitsu, Osaka-shi Osaka 554-0024 (JP); KUMAMOTO, Takahiro, Osaka-shi Osaka 554-0024 (JP); YANO, Keiji, Osaka-shi Osaka 554-0024 (JP)
(74) Representative: Boult Wade Tennant
(86) International application number: PCT/JP2015/085611
(87) International publication number: WO 2016/117264

(57) **Abstract**

A redox flow battery includes a cell stack formed by stacking a plurality of battery cells, a positive electrolyte circulation mechanism configured to circulate a positive electrolyte in the cell stack, and a negative electrolyte circulation mechanism configured to circulate a negative electrolyte in the cell stack. The redox flow battery includes a pressure difference forming mechanism that makes one of a pressure loss in a positive pipeline included in the positive electrolyte circulation mechanism and a pressure loss in a negative pipeline included in the negative electrolyte circulation mechanism greater than the other so that, when the positive electrolyte and the negative electrolyte are circulated in the cell stack, a pressure difference state is created where there is a difference between the pressures of the positive and negative electrolytes acting on a separation membrane included in each battery cell.

## Description

### Technical Field

The present invention relates to a redox flow battery that can be used not only to deal with momentary voltage drops and power failures, but can also be used for load leveling.

### Background Art

Examples of high-capacity rechargeable batteries that store renewable energy (e.g., solar or wind energy) include electrolyte circulation batteries, such as redox flow batteries (RF batteries). RF battery is a battery that is charged and discharged using a difference in oxidation-reduction potential between ions contained in a positive electrolyte and ions contained in a negative electrolyte (see, e.g., PTL 1). As in Fig. 10 illustrating operating principles of an RF battery α, the RF battery α includes a battery cell 100 divided into a positive portion 102 and a negative portion 103 by a separation membrane 101 that allows hydrogen ions to pass therethrough. The positive portion 102 includes a positive electrode 104, and a positive tank 106 storing a positive electrolyte is connected to the positive portion 102 by a positive supply pipe 108 and a positive return pipe 110. The positive supply pipe 108 is provided with a pump (positive electrolyte-delivery apparatus) 112. These components 106, 108, 110, and 112 form a positive electrolyte circulation mechanism 100P that circulates the positive electrolyte. Similarly, the negative portion 103 includes a negative electrode 105, and a negative tank 107 storing a negative electrolyte is connected to the negative portion 103 by a negative supply pipe 109 and a negative return pipe 111. The negative supply pipe 109 is provided with a pump (negative electrolyte-delivery apparatus) 113. These components 107, 109, 111, and 113 form a negative electrolyte circulation mechanism 100N that circulates the negative electrolyte. During charging and discharging, the electrolytes stored in the respective tanks 106 and 107 are circulated in the cells 102 and 103 by the pumps 112 and 113. When the RF battery α is not being charged or discharged, the pumps 112 and 113 are at rest and the electrolytes are not circulated.

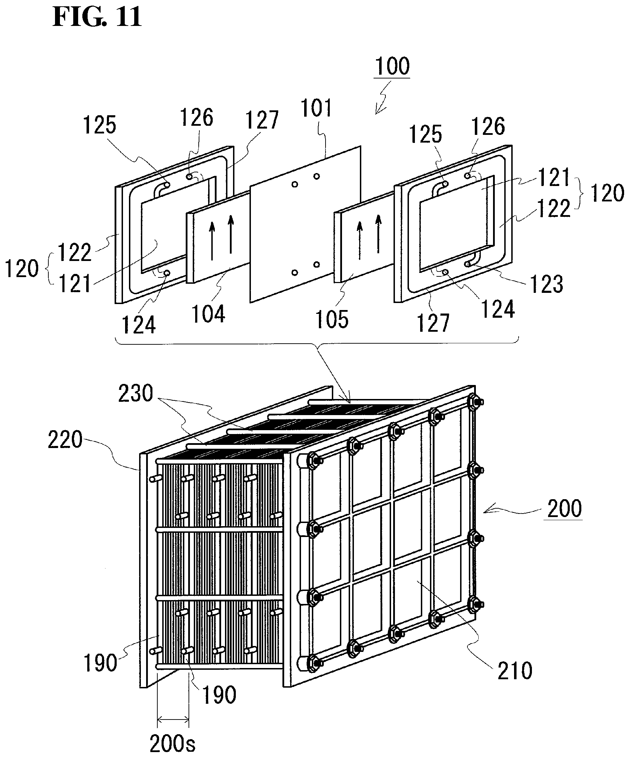

Typically, a plurality of battery cells 100 are stacked inside a structure called a cell stack 200, such as that illustrated in Fig. 11. The cell stack 200 is formed by sandwiching a multilayer structure called a sub-stack 200s between two end plates 210 and 220 on both sides and fastening the sub-stack 200s with a fastening mechanism 230 (a plurality of sub-stacks 200s are used in the illustrated configuration). The sub-stacks 200s have a configuration in which a plurality of cell units, each including a cell frame 120, the positive electrode 104, the separation membrane 101, the negative electrode 105, and another cell frame 120 (see the upper part of Fig. 11), are stacked to form a multilayer body which is sandwiched between two supply/discharge plates 190 (see the lower part of Fig. 11). The cell frames 120 included in each cell unit each include a frame body 122 having a through window and a bipolar plate 121 closing the through window. The cell frames 120 are arranged such that the positive electrode 104 is in contact with one side of the bipolar plate 121 and the negative electrode 105 is in contact with the other side of the bipolar plate 121. In this configuration, each battery cell 100 is formed between the bipolar plates 121 of adjacent cell frames 120.

In each sub-stack 200s, the electrolytes are circulated through the supply/discharge plates 190 into the battery cells 100 by liquid supplying manifolds 123 and 124 and liquid discharging manifolds 125 and 126 formed in each of the frame bodies 122. The positive electrolyte is supplied from the liquid supplying manifold 123 through an entrance slit formed on one side of the frame body 122 (i.e., on the front side in the drawing) to the positive electrode 104, and then discharged through an exit slit formed in the upper part of the frame body 122 to the liquid discharging manifold 125. Similarly, the negative electrolyte is supplied from the liquid supplying manifold 124 through an entrance slit (indicated by a dotted line) formed on the other side of the frame body 122 (i.e., on the back side in the drawing) to the negative electrode 105, and then discharged through an exit slit (indicated by a dotted line) formed in the upper part of the frame body 122 to the liquid discharging manifold 126. An annular sealing member 127, such as an O-ring or flat packing, is placed between the cell frames 120 to prevent leakage of the electrolytes from the sub-stack 200s.

Input and output of power between the battery cells 100 in each sub-stack 200s and an external device is carried out by a current collecting structure using current collecting plates made of a conductive material. Each sub-stack 200s includes a pair of current collecting plates, which are electrically connected to the respective bipolar plates 121 of the cell frames 120 disposed at both ends of a plurality of stacked cell frames 120 in the stacking direction.

### Citation List

### Patent Literature

PTL 1: Japanese Unexamined Patent Application Publication No. 2013-80613

### Summary of Invention

### Technical Problem

In the operation of a redox flow battery, there is a need to make the pressure of one of negative and positive electrolytes acting on a separation membrane in a cell stack higher than that of the other. Since a determination as to which pressure is to be made higher is on a case-by-case basis, the configuration needed here is one that can easily achieve a desired relation between the pressures.

The present invention has been made in view of the circumstances described above. An object of the present invention is to provide a redox flow battery that is capable of easily making the pressure of one of negative and positive electrolytes acting on a separation membrane in a cell stack higher than that of the other.

### Solution to Problem

A redox flow battery according to an aspect of the present invention includes a cell stack, a positive electrolyte circulation mechanism, and a negative electrolyte circulation mechanism. The cell stack includes a positive electrode, a negative electrode, and a separation membrane. The positive electrolyte circulation mechanism includes a positive tank storing a positive electrolyte, a positive pipeline connecting the positive tank to the cell stack, and a positive electrolyte-delivery apparatus delivering the positive electrolyte to the cell stack. The negative electrolyte circulation mechanism includes a negative tank storing a negative electrolyte, a negative pipeline connecting the negative tank to the cell stack, and a negative electrolyte-delivery apparatus delivering the negative electrolyte to the cell stack. The redox flow battery includes a pressure difference forming mechanism that makes one of a pressure loss in the positive pipeline and a pressure loss in the negative pipeline greater than the other so that, when the positive electrolyte and the negative electrolyte are circulated in the cell stack, a pressure difference state is created where there is a difference between a pressure of the positive electrolyte acting on the separation membrane and a pressure of the negative electrolyte acting on the separation membrane. Advantageous Effects of Invention

In the redox flow battery described above, it is possible, with a simple configuration, to make the pressure of one of the positive and negative electrolytes acting on the separation membrane in the cell stack higher than that of the other. Brief Description of Drawings

[Fig. 1] Figure 1 is a schematic diagram of a redox flow battery according to an embodiment.
[Fig. 2] Figure 2 is a schematic diagram of a pressure difference forming mechanism formed by making a positive return pipe longer than a negative return pipe.
[Fig. 3] Figure 3 is a schematic diagram of a pressure difference forming mechanism formed by making the positive return pipe narrower than the negative return pipe.
[Fig. 4] Figure 4 is a schematic diagram of a pressure difference forming mechanism formed by bending the positive return pipe in a more complex manner than the negative return pipe.
[Fig. 5] Figure 5 is a schematic diagram of a pressure difference forming mechanism composed of a positive heat exchanger and a negative heat exchanger.
[Fig. 6] Figure 6 is a schematic diagram of a pressure difference forming mechanism formed by making the negative return pipe longer than the positive return pipe.
[Fig. 7] Figure 7 is a schematic diagram of a pressure difference forming mechanism formed by making the negative return pipe narrower than the positive return pipe.
[Fig. 8] Figure 8 is a schematic diagram of a pressure difference forming mechanism formed by bending the negative return pipe in a more complex manner than the positive return pipe.
[Fig. 9] Figure 9 is a schematic diagram of a pressure difference forming mechanism composed of the positive heat exchanger and the negative heat exchanger.

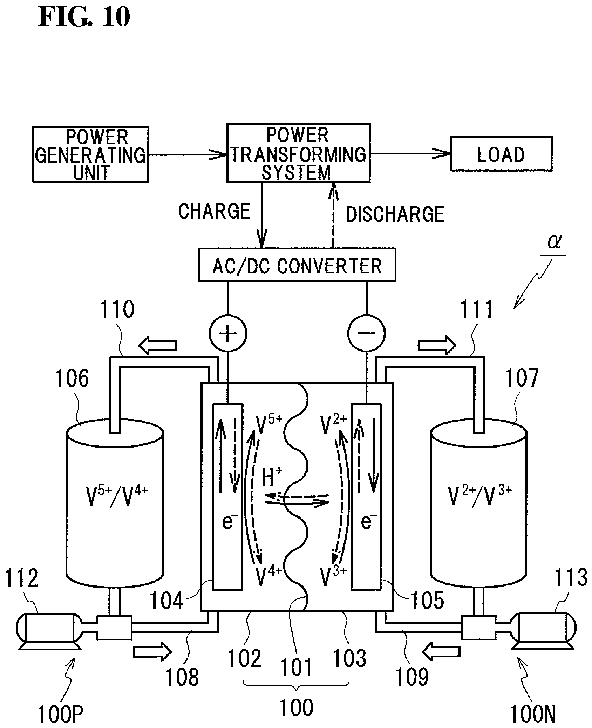

[Fig. 10] Figure 10 illustrates operating principles of a redox flow battery.
[Fig. 11] Figure 11 is a schematic diagram of a cell stack.

### Description of Embodiments

### [Description of Embodiments of the Present Invention]

Embodiments of the present invention are first listed below.

(1) A redox flow battery according to an embodiment includes a cell stack, a positive electrolyte circulation mechanism, and a negative electrolyte circulation mechanism. The cell stack includes a positive electrode, a negative electrode, and a separation membrane. The positive electrolyte circulation mechanism includes a positive tank storing a positive electrolyte, a positive pipeline connecting the positive tank to the cell stack, and a positive electrolyte-delivery apparatus delivering the positive electrolyte to the cell stack. The negative electrolyte circulation mechanism includes a negative tank storing a negative electrolyte, a negative pipeline connecting the negative tank to the cell stack, and a negative electrolyte-delivery apparatus delivering the negative electrolyte to the cell stack. The redox flow battery includes a pressure difference forming mechanism that makes one of a pressure loss in the positive pipeline and a pressure loss in the negative pipeline greater than the other so that, when the positive electrolyte and the negative electrolyte are circulated in the cell stack, a pressure difference state is created where there is a difference between a pressure of the positive electrolyte acting on the separation membrane and a pressure of the negative electrolyte acting on the separation membrane.
   In the redox flow battery disclosed in PTL 1, the flow paths of the positive and negative electrolytes in the cell frame in the cell stack are made different. In this case, when the electrolyte circulation condition, such as the type of electrolyte, is changed, it is difficult to create a desired pressure difference state in accordance with the change in the circulation condition. This is because the process of making the cell frame appropriate for the circulation condition involves disassembling the cell stack, processing the cell frame, and reassembling the cell stack. Moreover, if the desired pressure difference state cannot be achieved with the processed cell frame, it is necessary to further go through the process of disassembling, processing, and assembling. On the other hand, in the redox flow battery according to the embodiment, the pressure of one of the positive and negative electrolytes acting on the separation membrane in the cell stack is made higher than that of the other by adjusting the pressure losses in both the positive and negative pipelines. It is thus possible to easily achieve a desired pressure difference state without disassembling the cell stack.
   The pressure difference state where there is a difference between the pressures of the positive and negative electrolytes acting on the separation membrane is a state where a difference in pressure is created between the positive and negative electrolytes in such a way that the operation of the redox flow battery is not substantially affected (i.e., a state where the pressure of one of the electrolytes is higher than that of the other). A difference in pressure between the electrolytes can be appropriately set in accordance with the purpose. For example, a difference in pressure between the positive and negative electrolytes during operation of the redox flow battery can be set to 1000 Pa or more.
(2) In the redox flow battery according to the embodiment, one of a pressure loss in a positive return pipe (see below) included in the positive pipeline and a pressure loss in a negative return pipe (see below) included in the negative pipeline may be greater than the other.
   - the positive pipeline includes a positive supply pipe supplying the positive electrolyte from the positive tank to the cell stack, and the positive return pipe discharging the positive electrolyte from the cell stack to the positive tank.
   - The negative pipeline includes a negative supply pipe supplying the negative electrolyte from the negative tank to the cell stack, and the negative return pipe discharging the negative electrolyte from the cell stack to the negative tank.

   Creating a difference in pressure loss between the positive return pipe and the negative return pipe makes it easier to create and maintain the pressure difference state described above than in the case of creating a difference in pressure loss between the positive supply pipe and the negative supply pipe. By creating a difference in pressure loss between the positive supply pipe and the negative supply pipe as well as creating a difference in pressure loss between the positive return pipe and the negative return pipe, it of course becomes possible to more reliably create and maintain the pressure difference state described above.
(3) In the redox flow battery according to the embodiment, one of the positive pipeline and the negative pipeline may be longer in length than the other.
   Increasing the length of a pipeline increases a pressure loss of an electrolyte flowing in the pipeline. For example, by making the positive return pipe of the positive pipeline longer than the negative return pipe of the negative pipeline, a pressure loss in the positive return pipe becomes greater than a pressure loss in the negative return pipe. As a result, in the cell stack, the pressure of the positive electrolyte becomes higher than the pressure of the negative electrolyte, and thus a pressure difference state can be created where, in the cell stack, the pressure of the positive electrolyte acting on the separation membrane is higher than the pressure of the negative electrolyte acting on the separation membrane.
(4) In the redox flow battery according to the embodiment, one of the positive pipeline and the negative pipeline may be smaller in diameter than the other.
   Narrowing a pipeline increases a pressure loss of an electrolyte flowing in the pipeline. For example, by making the positive return pipe of the positive pipeline narrower than the negative return pipe of the negative pipeline, a pressure loss in the positive return pipe becomes greater than a pressure loss in the negative return pipe. As a result, in the cell stack, the pressure of the positive electrolyte becomes higher than the pressure of the negative electrolyte, and thus a pressure difference state can be created where, in the cell stack, the pressure of the positive electrolyte acting on the separation membrane is higher than the pressure of the negative electrolyte acting on the separation membrane.
(5) In the redox flow battery according to the embodiment, one of the positive pipeline and the negative pipeline may be bent in a more complex manner than the other.
   Bending a pipeline in a complex manner (e.g., at many points or with small bend radii) increases a pressure loss of an electrolyte flowing in the pipeline. For example, by bending the positive return pipe of the positive pipeline in a more complex manner than the negative return pipe of the negative pipeline, a pressure loss in the positive return pipe becomes greater than a pressure loss in the negative return pipe. As a result, in the cell stack, the pressure of the positive electrolyte becomes higher than the pressure of the negative electrolyte, and thus a pressure difference state can be created where, in the cell stack, the pressure of the positive electrolyte acting on the separation membrane is higher than the pressure of the negative electrolyte acting on the separation membrane.
(6) In the redox flow battery according to the embodiment, the positive pipeline and the negative pipeline may have respective valves, and opening of one of the valve on the positive pipeline and the valve on the negative pipeline may be narrower than opening of the other.
   Narrowing the opening of a valve on a pipeline increases a pressure loss of an electrolyte flowing in the pipeline. For example, by making the opening of the valve on the positive return pipe narrower than the opening of the valve on the negative return pipe, a pressure loss in the positive return pipe becomes greater than a pressure loss in the negative return pipe. As a result, in the cell stack, the pressure of the positive electrolyte becomes higher than the pressure of the negative electrolyte, and thus a pressure difference state can be created where, in the cell stack, the pressure of the positive electrolyte acting on the separation membrane is higher than the pressure of the negative electrolyte acting on the separation membrane.
(7) In the redox flow battery according to the embodiment, the pressure difference forming mechanism may include a flow-rate control unit that controls an output from the positive electrolyte-delivery apparatus and an output from the negative electrolyte-delivery apparatus, thereby making one of the amount of electrolyte delivered from the positive electrolyte-delivery apparatus and the amount of electrolyte delivered from the negative electrolyte-delivery apparatus greater than the other.
   Increasing the amount of electrolyte delivered to a pipeline increases the pressure of electrolyte in the pipeline. For example, by making the amount of electrolyte delivered from the positive electrolyte-delivery apparatus greater than the amount of electrolyte delivered from the negative electrolyte-delivery apparatus, the pressure of the positive electrolyte becomes higher than the pressure of the negative electrolyte in the cell stack, and thus a pressure difference state can be created where, in the cell stack, the pressure of the positive electrolyte acting on the separation membrane is higher than the pressure of the negative electrolyte acting on the separation membrane.
(8) The redox flow battery according to the embodiment may further include a first heat exchanger disposed in one of the positive return pipe and the negative return pipe, and the other of the positive return pipe and the negative return pipe may be provided with no heat exchanger, or may be provided with a second heat exchanger smaller in pressure loss than the first heat exchanger.
   Providing a heat exchanger in a pipeline increases a pressure loss of an electrolyte flowing in the pipeline. This is because a heat exchanger used for cooling an electrolyte typically includes a pipe for circulating the electrolyte and a refrigerant outside the pipe, and the pipeline provided with the heat exchanger is substantially increased in length by the length of the pipe included in the heat exchanger. For example, by providing a first heat exchanger in the positive pipeline and then providing, in the negative pipeline, no heat exchanger or a second heat exchanger smaller in pressure loss than the first heat exchanger, a pressure loss in the positive pipeline becomes greater than a pressure loss in the negative pipeline. As a result, in the cell stack, the pressure of the positive electrolyte becomes higher than the pressure of the negative electrolyte, and thus a pressure difference state can be created where, in the cell stack, the pressure of the positive electrolyte acting on the separation membrane is higher than the pressure of the negative electrolyte acting on the separation membrane.

### [Details of Embodiments of the Present Invention]

Hereinafter, a redox flow battery (RF battery) operation method according to embodiments, as well as embodiments of an RF battery, will be described. In the following embodiments, components denoted by the same reference numerals have the same functions. Note that the present invention is not limited to the configurations described in the following embodiments, and is intended to include meanings defined in, or equivalent to, the claims and all changes within the scope of the claims.

### First Embodiment

### (Overall Configuration of RF Battery)

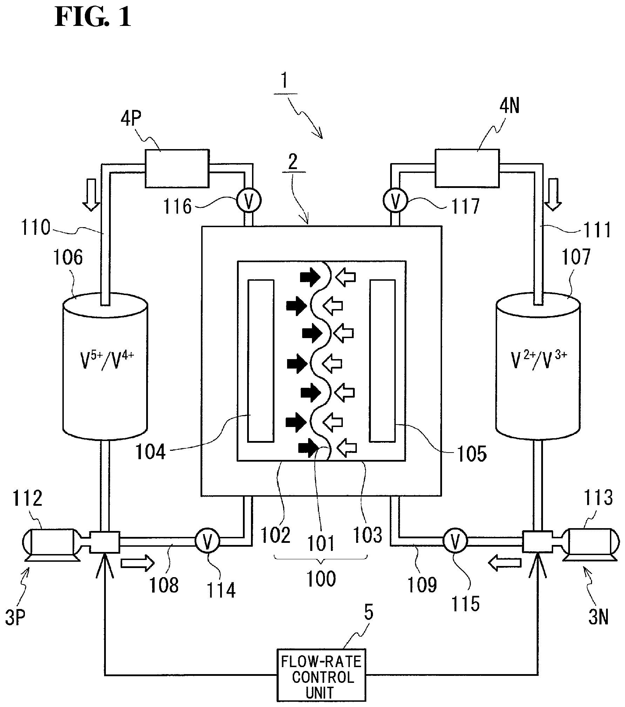

As in the schematic diagram of Fig. 1, an RF battery 1 according to the present embodiment includes, like the conventional RF battery, a cell stack 2, a positive electrolyte circulation mechanism 3P, and a negative electrolyte circulation mechanism 3N. Although the configuration of the cell stack 2 is illustrated in a simplified manner in Fig. 1, the cell stack 2 is formed in practice by fastening a plurality of sub-stacks 200s with end plates 210 and 220, as described with reference to the lower part of Fig. 11. Although only one battery cell 100 of the cell stack 2 is shown in Fig. 1, a plurality of battery cells 100 are stacked in practice. Each battery cell 100 includes a positive electrode 104, a negative electrode 105, and a separation membrane 101 which separates the two electrodes 104 and 105.

The positive electrolyte circulation mechanism 3P includes a positive tank 106, a positive pipeline composed of a positive supply pipe 108 and a positive return pipe 110, and a pump (positive electrolyte-delivery apparatus) 112. The positive supply pipe 108 is a pipe that supplies a positive electrolyte from the positive tank 106 to the cell stack 2, and the positive return pipe 110 is a pipe that discharges the positive electrolyte from the cell stack 2 to the positive tank 106. The pump 112 is disposed in the positive supply pipe 108, and delivers the positive electrolyte to the cell stack 2.

The negative electrolyte circulation mechanism 3N includes a negative tank 107, a negative pipeline composed of a negative supply pipe 109 and a negative return pipe 111, and a pump (negative electrolyte-delivery apparatus) 113. The negative supply pipe 109 is a pipe that supplies a negative electrolyte from the negative tank 107 to the cell stack 2, and the negative return pipe 111 is a pipe that discharges the negative electrolyte from the cell stack 2 to the negative tank 107. The pump 113 is disposed in the negative supply pipe 109, and delivers the negative electrolyte to the cell stack 2.

A main difference between the RF battery 1 of the embodiment configured as described above and the conventional one is that the RF battery 1 include a first pressure difference forming mechanism that creates a pressure difference state where, when the positive electrolyte and the negative electrolyte are circulated in the cell stack 2, the pressure of the positive electrolyte acting on the separation membrane 101 is higher than the pressure of the negative electrolyte acting on the separation membrane 101 (i.e., a state where pressure acts in the direction indicated by filled arrows).

### (First Pressure Difference Forming Mechanism)

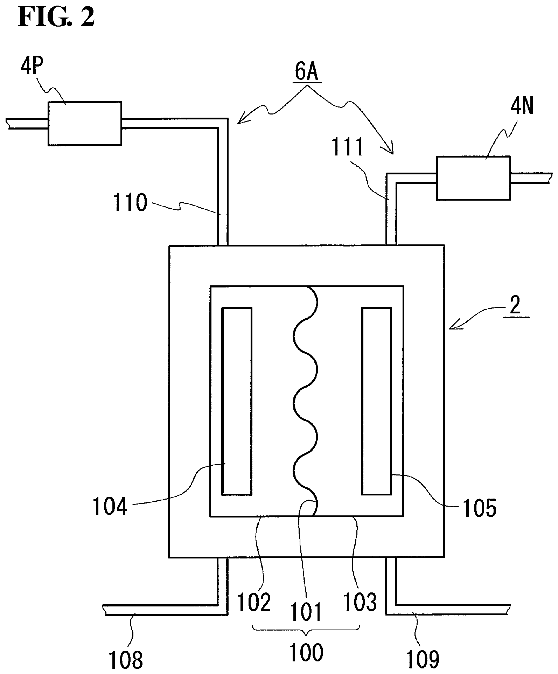

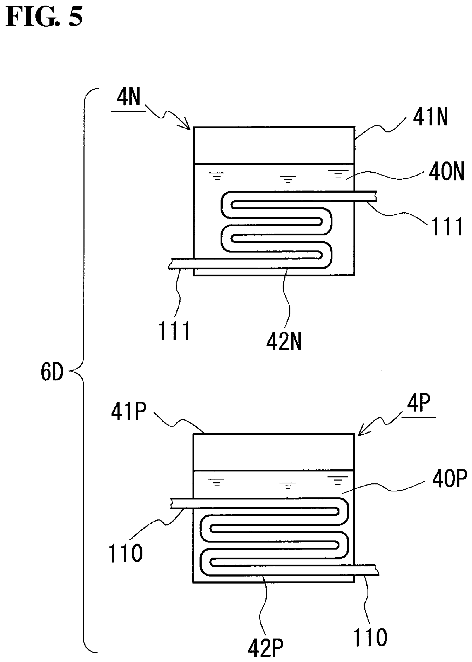

The first pressure difference forming mechanism is formed by varying the configuration (mainly dimension) of an existing component of the RF battery 1. Specifically, the first pressure difference forming mechanism is formed by creating a difference in configuration between the positive electrolyte circulation mechanism 3P and the negative electrolyte circulation mechanism 3N. Examples of the first pressure difference forming mechanism will now be described on the basis of Figs. 2 to 5. Note that the tanks, pumps, and valves are omitted in Figs. 2 to 4, and the cell stack is omitted in addition thereto in Fig. 5.

### [Creating Pressure Difference State by Making Positive Pipeline and Negative Pipeline Different in Length]

Figure 2 illustrates a pressure difference forming mechanism 6A formed by making the positive return pipe 110 longer than the negative return pipe 111. Increasing the length of a pipe increases a pressure loss of an electrolyte flowing in the pipe. In Fig. 2, where the positive return pipe 110 is longer than the negative return pipe 111, a pressure loss in the positive return pipe 110 is greater than a pressure loss in the negative return pipe 111. As a result, in the cell stack 2, the pressure of the positive electrolyte is higher than the pressure of the negative electrolyte, and thus a pressure difference state can be created where, in the cell stack 2, the pressure of the positive electrolyte acting on the separation membrane 101 is higher than the pressure of the negative electrolyte acting on the separation membrane 101.

While not shown, the pressure difference forming mechanism 6A may be formed by making the negative supply pipe 109 longer than the positive supply pipe 108. This lowers the pressure of the negative electrolyte in the cell stack 2, and creates a state where the pressure of the positive electrolyte is higher than the pressure of the negative electrolyte. The configuration where the return pipes 110 and 111 have different lengths may of course be combined with the configuration where the supply pipes 108 and 109 have different lengths to form the pressure difference forming mechanism 6A.

### [Creating Pressure Difference State by Making Positive Pipeline and Negative Pipeline Different in Diameter]

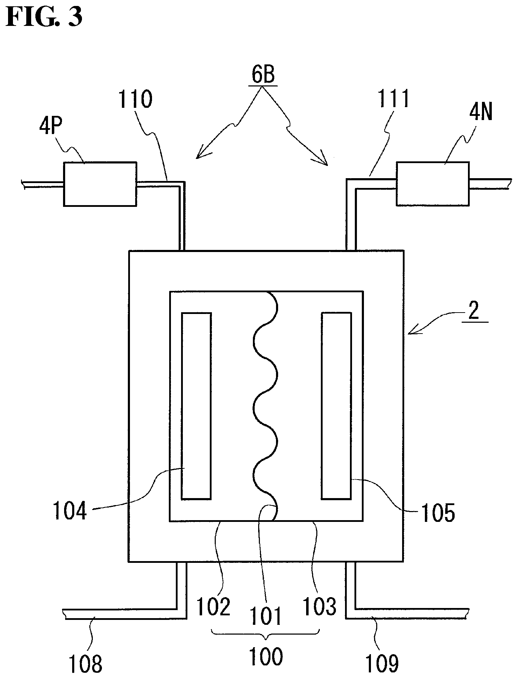

Figure 3 illustrates a pressure difference forming mechanism 6B formed by making the positive return pipe 110 narrower than the negative return pipe 111. Narrowing a pipe increases a pressure loss of an electrolyte flowing in the pipe. In Fig. 3, where the positive return pipe 110 is narrower than the negative return pipe 111, a pressure loss in the positive return pipe 110 is greater than a pressure loss in the negative return pipe 111. As a result, in the cell stack 2, the pressure of the positive electrolyte is higher than the pressure of the negative electrolyte, and thus a pressure difference state can be created where, in the cell stack 2, the pressure of the positive electrolyte acting on the separation membrane 101 is higher than the pressure of the negative electrolyte acting on the separation membrane 101. When the pressure difference forming mechanism 6B is adopted, the inside diameter of the positive return pipe 110 is preferably less than or equal to 80% of the inside diameter of the negative return pipe 111.

While not shown, the pressure difference forming mechanism 6B may be formed by making the negative supply pipe 109 narrower than the positive supply pipe 108. This lowers the pressure of the negative electrolyte in the cell stack 2, and creates a state where the pressure of the positive electrolyte is higher than the pressure of the negative electrolyte. The configuration where the return pipes 110 and 111 have different diameters may of course be combined with the configuration where the supply pipes 108 and 109 have different diameters to form the pressure difference forming mechanism 6B.

### [Creating Pressure Difference State by Making Positive Pipeline and Negative Pipeline Different in Path]

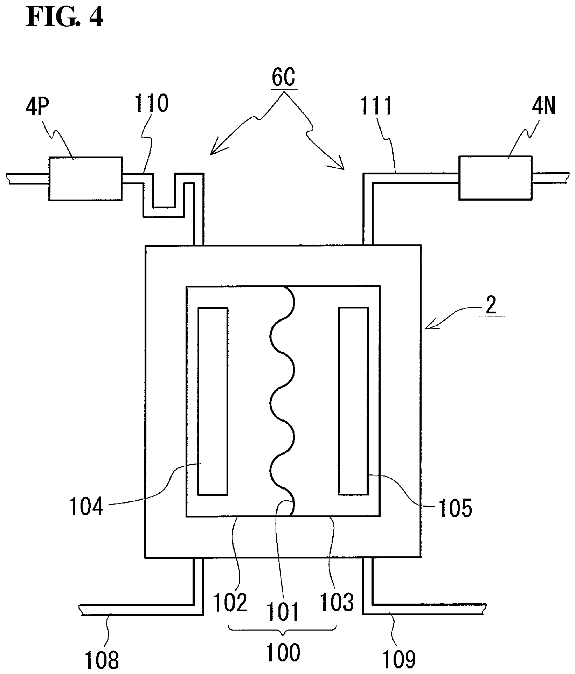

Figure 4 illustrates a pressure difference forming mechanism 6C formed by bending the positive return pipe 110 in a more complex manner than the negative return pipe 111. Increasing the number of bends in a pipe increases a pressure loss of an electrolyte flowing in the pipe. In Fig. 4, where the positive return pipe 110 is bent in a more complex manner than the negative return pipe 111, a pressure loss in the positive return pipe 110 is greater than a pressure loss in the negative return pipe 111. As a result, in the cell stack 2, the pressure of the positive electrolyte is higher than the pressure of the negative electrolyte, and thus a pressure difference state can be created where, in the cell stack 2, the pressure of the positive electrolyte acting on the separation membrane 101 is higher than the pressure of the negative electrolyte acting on the separation membrane 101.

While not shown, the pressure difference forming mechanism 6C may be formed by bending the negative supply pipe 109 in a more complex manner than the positive supply pipe 108. The configuration where the return pipes 110 and 111 have different bent states may of course be combined with the configuration where the supply pipes 108 and 109 have different bent states to form the pressure difference forming mechanism 6C.

### [Creating Pressure Difference State by Making Positive Pipeline and Negative Pipeline Different in Valve Opening]

The positive pipeline and the negative pipeline of the RF battery 1 illustrated in Fig. 1 each have a plurality of valves. Referring to Fig. 1, the positive pipeline has valves 114 and 116 and the negative pipeline has valves 115 and 117. The valves 114 to 117 are each used to stop the circulation of the electrolyte into the cell stack 2. A pressure difference forming mechanism may be formed using the valves 114 to 117. For example, by making the opening of the valve 116 on the positive return pipe 110 narrower than the opening of the valve 117 on the negative return pipe 111, a pressure loss in the positive return pipe 110 can be made greater than a pressure loss in the negative return pipe 111. As a result, in the cell stack 2, the pressure of the positive electrolyte becomes higher than the pressure of the negative electrolyte, and thus a pressure difference state can be created where, in the cell stack 2, the pressure of the positive electrolyte acting on the separation membrane 101 is higher than the pressure of the negative electrolyte acting on the separation membrane 101.

The locations of the valves 114 to 117 are not limited to those shown in Fig. 1. Although the positive pipeline and the negative pipeline each have two valves in Fig. 1, the number of valves is not limited to this. For example, the positive pipeline and the negative pipeline may each have three or more valves, or may each have one valve.

Making the opening of the valve 115 on the negative supply pipe 109 narrower than the opening of the valve 114 on the positive supply pipe 108 can also lower the pressure of the negative electrolyte in the cell stack 2, and can thereby create the pressure difference state described above. The configuration where the valves 116 and 117 on the return pipes 110 and 111 have different degrees of opening may of course be combined with the configuration where the valves 114 and 115 on the supply pipes 108 and 109 have different degrees of opening to form a pressure difference forming mechanism.

### [Creating Pressure Difference State by Making Positive Electrolyte-Delivery Apparatus and Negative Electrolyte-Delivery Apparatus Different in the Amount of Electrolyte Delivered therefrom]

A pressure difference forming mechanism may be formed by making the amount of the positive electrolyte delivered from the pump (positive electrolyte-delivery apparatus) 112 illustrated in Fig. 1 greater than the amount of the negative electrolyte delivered from the pump (negative electrolyte-delivery apparatus) 113. The amount of electrolyte delivered may be regulated by controlling the outputs of the pumps 112 and 113. In the configuration of Fig. 1, a pump control unit (flow-rate control unit) 5 is connected to the pumps 112 and 113, so that the relative output of the pumps 112 and 113 can be accurately controlled. The output of each of the pumps 112 and 113 may be controlled by the pump control unit 5 on the basis of values determined in advance using the RF battery 1 prepared for testing. Regulating the amount of electrolyte delivered from each of the pumps 112 and 113 can also make the pressure of the positive electrolyte higher than the pressure of the negative electrolyte in the cell stack 2, and can thereby create the pressure difference state where, in the cell stack 2, the pressure of the positive electrolyte acting on the separation membrane 101 is higher than the pressure of the negative electrolyte acting on the separation membrane 101.

### [Creating Pressure Difference State by Making Positive Heat Exchanger and Negative Heat Exchanger Different in Configuration]

The RF battery 1 illustrated in Fig. 1 includes a positive heat exchanger 4P and a negative heat exchanger 4N disposed in the positive return pipe 110 and the negative return pipe 111, respectively. The heat exchangers 4P and 4N can form a pressure difference forming mechanism 6D (see Fig. 5).

The upper part of Fig. 5 is a schematic diagram of the negative heat exchanger 4N, and the lower part of Fig. 5 is a schematic diagram of the positive heat exchanger 4P. A basic configuration of heat exchangers is known (see, e.g., Japanese Unexamined Patent Application Publication No. 2013-206566). For example, as illustrated in Fig. 5, the heat exchanger 4P (4N) can be formed by routing a pipe 42P (42N) in a container 41P (41N) storing a refrigerant 40P (40N). The pipe 42P (42N) is connected to the return pipe 110 (111), and thus allows the positive electrolyte (negative electrolyte) to flow therein. While flowing in the pipe 42P (42N), the positive electrolyte (negative electrolyte) is cooled by the refrigerant 40P (40N). The refrigerant 40P (40N), such as a gas refrigerant for air cooling or a liquid refrigerant for water cooling, is cooled by a cooling mechanism (not shown). The pipe 42P (42N) may be considered here as part of the return pipe 110 (111).

When the heat exchangers 4P and 4N form the pressure difference forming mechanism 6D, the pipe 42P of the positive heat exchanger 4P may be made longer than the pipe 42N of the negative heat exchanger 4N as illustrated in the drawing. Thus, for the same reason as in the case of the pressure difference forming mechanism 6A formed by making the lengths of the return pipes 110 and 111 different, the pressure difference state can be created where the pressure of the positive electrolyte acting on the separation membrane 101 is higher than the pressure of the negative electrolyte acting on the separation membrane 101.

Besides, the pressure difference state described above may be created by making the pipe 42P narrower than the pipe 42N, or by bending the pipe 42P at more points than the pipe 42N. The lengths, diameters, and bent states of the pipes may of course be combined to create the pressure difference state described above. The pressure difference state described above may be created by providing only the positive heat exchanger 4P without providing the negative heat exchanger 4N.

### [Other Measures]

The pressure difference state described above may be created by positioning the positive tank 106 illustrated in Fig. 1 higher than the negative tank 107. The pressure difference state described above may be created by routing the positive return pipe 110 at a position higher than the negative return pipe 111.

### [Combinations]

The pressure difference forming mechanisms described above can be used either alone or in combination. For example, combining the configuration where the positive pipeline and the negative pipeline have different lengths with the configuration where the positive pipeline and the negative pipeline have different diameters makes it easier to create a desired pressure difference state. It is preferable that the configuration where the positive pipeline and the negative pipeline have different lengths and diameters be combined with the configuration where the positive pump (positive electrolyte-delivery apparatus) and the negative pump (negative electrolyte-delivery apparatus) differ in the amount of electrolyte delivered therefrom, because this allows fine adjustment of the pressure difference state described above.

### [Additional Remarks]

In the present embodiment including the first pressure difference forming mechanism, the flow paths of the positive and negative electrolytes in the cell stack 2 are the same in configuration. To change the flow paths in the cell stack 2, it is necessary to change the configuration of the cell frames 120 illustrated in Fig. 11. This is because since creating the cell frames 120 requires a mold, it is not easy to modify the cell frames 120. On the other hand, as described above, the first pressure difference forming mechanism of the present embodiment can be easily formed by making the positive electrolyte circulation mechanism 3P and the negative electrolyte circulation mechanism 3N different in configuration.

### (RF Battery Operation Method)

The RF battery 1 for testing is prepared, which includes either one or a combination of the pressure difference forming mechanisms described above. Then, while a pressure on the separation membrane 101 in the RF battery 1 for testing is being monitored, the positive electrolyte and the negative electrolyte are circulated in the cell stack 2. On the basis of the result of the monitoring, the shapes and dimensions of the components of the RF battery 1 are readjusted and the outputs of the pumps 112 and 113 are varied, so as to determine optimum values for the shapes and dimensions of the components and optimum values for the outputs of the pumps 112 and 113. When the RF battery 1 designed on the basis of the optimum values is used, the pressure of the positive electrolyte acting on the separation membrane 101 can be made higher than the pressure of the negative electrolyte acting on the separation membrane 101.

The pressure difference state is preferably one where, over the entire surface of the separation membrane 101, the pressure of the positive electrolyte acting on the separation membrane 101 is higher than the pressure of the negative electrolyte acting on the separation membrane 101. This is because even when the pressure of the positive electrolyte immediately after being discharged from the cell stack is simply higher than the pressure of the negative electrolyte, the pressure of the positive electrolyte acting on the separation membrane may be lower than the pressure of the negative electrolyte acting on the separation membrane at some points on the surface of the separation membrane. With the pressure difference forming mechanisms described above, a pressure difference state can be created where, over the entire surface of the separation membrane 101, the pressure of the positive electrolyte acting on the separation membrane 101 is higher than the pressure of the negative electrolyte acting on the separation membrane 101.

### (Others)

It is preferable to maintain the pressure difference state described above even in the process of stopping the RF battery 1 or stopping the circulation of the electrolytes. For example, to maintain the pressure difference state, the outputs of the pumps 112 and 113 are gradually weakened and then the pumps 112 and 113 are stopped at the same time. Until the pumps 112 and 113 are stopped, the outputs of the pumps 112 and 113 are regulated to make the amount of electrolyte delivered from the positive pump 112 greater than the amount of electrolyte delivered from the negative pump 113. This makes it possible to maintain the pressure difference state until the circulation of the electrolytes is stopped. Alternatively, by gradually weakening the outputs of the pumps 112 and 113 and then stopping the negative pump 113 before stopping the positive pump 112, the pressure difference state can be maintained until the electrolyte circulation is stopped. The latter technique may be restated as a technique that keeps the positive pump 112 moving for a while after the negative pump 113 is stopped.

### Second Embodiment

A second embodiment describes a configuration in which the RF battery 1 illustrated in Fig. 1 includes a second pressure difference forming mechanism that creates a pressure difference state where, when the positive electrolyte and the negative electrolyte are circulated in the cell stack 2, the pressure of the negative electrolyte acting on the separation membrane 101 is higher than the pressure of the positive electrolyte acting on the separation membrane 101 (i.e., a state where pressure acts on the separation membrane 101 in the direction indicated by open arrows in the battery cell 100 illustrated in Fig. 1). Configurations other than that of the second pressure difference forming mechanism will not be described, as they are the same as those in the first embodiment.

### (Second Pressure Difference Forming Mechanism)

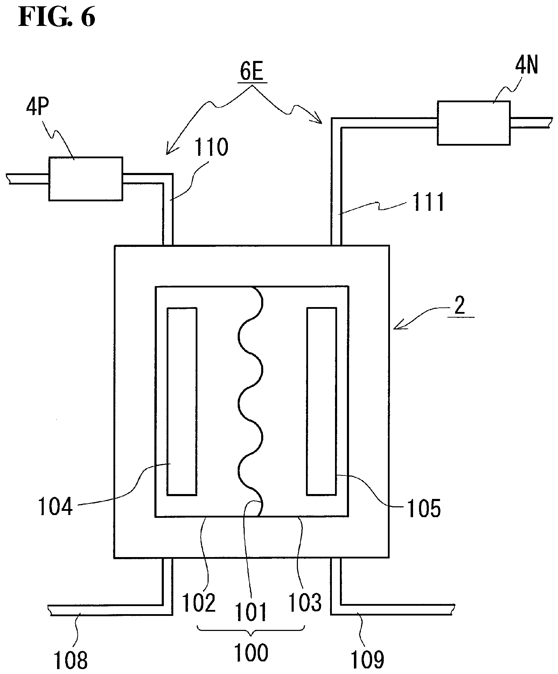

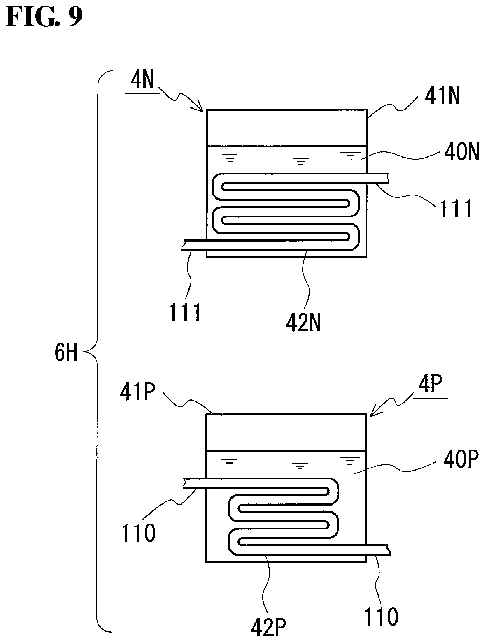

The second pressure difference forming mechanism in which the pressure of the negative electrolyte acting on the separation membrane 101 is higher than the pressure of the positive electrolyte acting on the separation membrane 101 is formed by varying the configuration (mainly dimension) of an existing component of the RF battery 1. Specifically, the second pressure difference forming mechanism is formed by creating a difference in configuration between the positive electrolyte circulation mechanism 3P and the negative electrolyte circulation mechanism 3N. Examples of the second pressure difference forming mechanism will now be described on the basis of Figs. 6 to 9. Note that the tanks, pumps, and valves are omitted in Figs. 6 to 8, and the cell stack is omitted in addition thereto in Fig. 9.

### [Creating Pressure Difference State by Making Positive Pipeline and Negative Pipeline Different in Length]

Figure 6 illustrates a pressure difference forming mechanism 6E formed by making the negative return pipe 111 longer than the positive return pipe 110. Increasing the length of a pipe increases a pressure loss of an electrolyte flowing in the pipe. In Fig. 6, where the negative return pipe 111 is longer than the positive return pipe 110, a pressure loss in the negative return pipe 111 is greater than a pressure loss in the positive return pipe 110. As a result, in the cell stack 2, the pressure of the negative electrolyte is higher than the pressure of the positive electrolyte, and thus a pressure difference state can be created where, in the cell stack 2, the pressure of the negative electrolyte acting on the separation membrane 101 is higher than the pressure of the positive electrolyte acting on the separation membrane 101.

While not shown, the pressure difference forming mechanism 6E may be formed by making the positive supply pipe 108 longer than the negative supply pipe 109. This lowers the pressure of the positive electrolyte in the cell stack 2, and creates a state where the pressure of the negative electrolyte is higher than the pressure of the positive electrolyte. The configuration where the return pipes 110 and 111 have different lengths may of course be combined with the configuration where the supply pipes 108 and 109 have different lengths to form the pressure difference forming mechanism 6A.

### [Creating Pressure Difference State by Making Positive Pipeline and Negative Pipeline Different in Diameter]

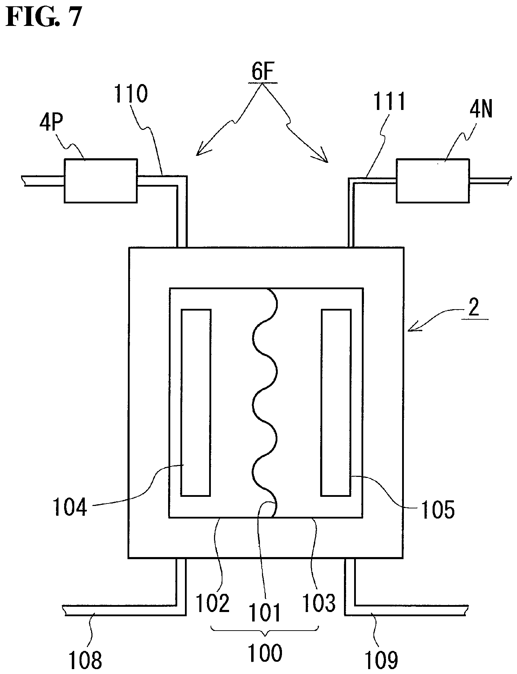

Figure 7 illustrates a pressure difference forming mechanism 6F formed by making the negative return pipe 111 narrower than the positive return pipe 110. Narrowing a pipe increases a pressure loss of an electrolyte flowing in the pipe. In Fig. 7, where the negative return pipe 111 is narrower than the positive return pipe 110, a pressure loss in the negative return pipe 111 is greater than a pressure loss in the positive return pipe 110. As a result, in the cell stack 2, the pressure of the negative electrolyte is higher than the pressure of the positive electrolyte, and thus a pressure difference state can be created where, in the cell stack 2, the pressure of the negative electrolyte acting on the separation membrane 101 is higher than the pressure of the positive electrolyte acting on the separation membrane 101. When the pressure difference forming mechanism 6F is adopted, the inside diameter of the negative return pipe 111 is preferably less than or equal to 80% of the inside diameter of the positive return pipe 110.

While not shown, the pressure difference forming mechanism 6F may be formed by making the positive supply pipe 108 narrower than the negative supply pipe 109. This lowers the pressure of the positive electrolyte in the cell stack 2, and creates a state where the pressure of the negative electrolyte is higher than the pressure of the positive electrolyte. The configuration where the return pipes 110 and 111 have different diameters may of course be combined with the configuration where the supply pipes 108 and 109 have different diameters to form the pressure difference forming mechanism 6B.

### [Creating Pressure Difference State by Making Positive Pipeline and Negative Pipeline Different in Path]

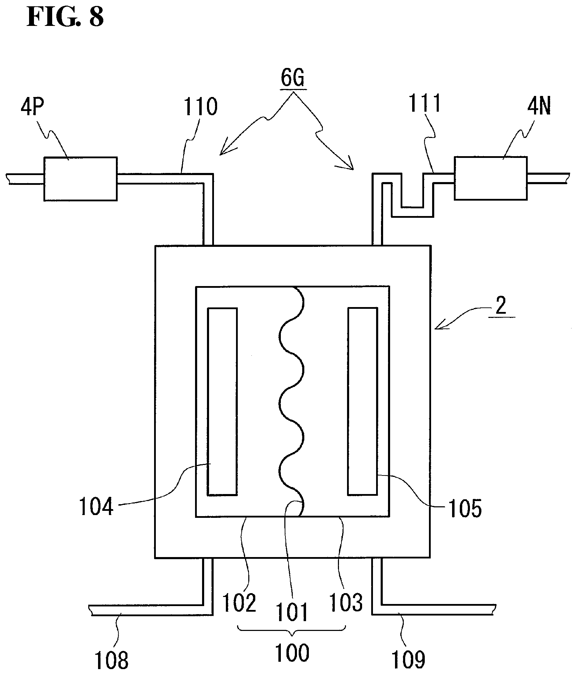

Figure 8 illustrates a pressure difference forming mechanism 6G formed by bending the negative return pipe 111 in a more complex manner than the positive return pipe 110. Increasing the number of bends in a pipe increases a pressure loss of an electrolyte flowing in the pipe. In Fig. 8, where the negative return pipe 111 is bent in a more complex manner than the positive return pipe 110, a pressure loss in the negative return pipe 111 is greater than a pressure loss in the positive return pipe 110. As a result, in the cell stack 2, the pressure of the negative electrolyte is higher than the pressure of the positive electrolyte, and thus a pressure difference state can be created where, in the cell stack 2, the pressure of the negative electrolyte acting on the separation membrane 101 is higher than the pressure of the positive electrolyte acting on the separation membrane 101.

While not shown, the pressure difference forming mechanism 6C may be formed by bending the positive supply pipe 108 in a more complex manner than the negative supply pipe 109. The configuration where the return pipes 110 and 111 have different bent states may of course be combined with the configuration where the supply pipes 108 and 109 have different bent states to form the pressure difference forming mechanism 6G.

### [Creating Pressure Difference State by Making Positive Pipeline and Negative Pipeline Different in Valve Opening]

The positive pipeline and the negative pipeline of the RF battery 1 illustrated in Fig. 1 each have a plurality of valves. Referring to Fig. 1, the positive pipeline has the valves 114 and 116 and the negative pipeline has the valves 115 and 117. The valves 114 to 117 are each used to stop the circulation of the electrolyte into the cell stack 2. A pressure difference forming mechanism may be formed using the valves 114 to 117. For example, by making the opening of the valve 117 on the negative return pipe 111 narrower than the opening of the valve 116 on the positive return pipe 110, a pressure loss in the negative return pipe 111 can be made greater than a pressure loss in the positive return pipe 110. As a result, in the cell stack 2, the pressure of the negative electrolyte becomes higher than the pressure of the positive electrolyte, and thus a pressure difference state can be created where, in the cell stack 2, the pressure of the negative electrolyte acting on the separation membrane 101 is higher than the pressure of the positive electrolyte acting on the separation membrane 101.

The locations of the valves 114 to 117 are not limited to those shown in Fig. 1. Although the positive pipeline and the negative pipeline each have two valves in Fig. 1, the number of valves is not limited to this. For example, the positive pipeline and the negative pipeline may each have three or more valves, or may each have one valve.

Making the opening of the valve 114 on the positive supply pipe 108 narrower than the opening of the valve 115 on the negative supply pipe 109 can also lower the pressure of the positive electrolyte in the cell stack 2, and can thereby create the pressure difference state described above. The configuration where the valves 116 and 117 on the return pipes 110 and 111 have different degrees of opening may of course be combined with the configuration where the valves 114 and 115 on the supply pipes 108 and 109 have different degrees of opening to form a pressure difference forming mechanism.

### [Creating Pressure Difference State by Making Positive Electrolyte-Delivery Apparatus and Negative Electrolyte-Delivery Apparatus Different in the Amount of Electrolyte Delivered therefrom]

A pressure difference forming mechanism may be formed by making the amount of the negative electrolyte delivered from the pump (negative electrolyte-delivery apparatus) pump 113 greater than the amount of the positive electrolyte delivered from the pump (positive electrolyte-delivery apparatus) 112. The amount of electrolyte delivered may be regulated by controlling the outputs of the pumps 112 and 113. In the configuration of Fig. 1, the pump control unit 5 is connected to the pumps 112 and 113, so that the relative output of the pumps 112 and 113 can be accurately controlled. The output of each of the pumps 112 and 113 may be controlled by the pump control unit 5 on the basis of values determined in advance using the RF battery 1 prepared for testing. Regulating the amount of electrolyte delivered from each of the pumps 112 and 113 can also make the pressure of the negative electrolyte higher than the pressure of the positive electrolyte in the cell stack 2, and can thereby create the pressure difference state where, in the cell stack 2, the pressure of the negative electrolyte acting on the separation membrane 101 is higher than the pressure of the positive electrolyte acting on the separation membrane 101.

### [Creating Pressure Difference State by Making Positive Heat Exchanger and Negative Heat Exchanger Different in Configuration]

The RF battery 1 illustrated in Fig. 1 includes the positive heat exchanger 4P and the negative heat exchanger 4N disposed in the positive return pipe 110 and the negative return pipe 111, respectively. The heat exchangers 4P and 4N can form a pressure difference forming mechanism 6H (see Fig. 9).

The upper part of Fig. 9 is a schematic diagram of the negative heat exchanger 4N, and the lower part of Fig. 9 is a schematic diagram of the positive heat exchanger 4P. A basic configuration of heat exchangers is known (see, e.g., Japanese Unexamined Patent Application Publication No. 2013-206566). For example, as illustrated in Fig. 9, the heat exchanger 4P (4N) can be formed by routing the pipe 42P (42N) in the container 41P (41N) storing the refrigerant 40P (40N). The pipe 42P (42N) is connected to the return pipe 110 (111), and thus allows the positive electrolyte (negative electrolyte) to flow therein. While flowing in the pipe 42P (42N), the positive electrolyte (negative electrolyte) is cooled by the refrigerant 40P (40N). The refrigerant 40P (40N), such as a gas refrigerant for air cooling or a liquid refrigerant for water cooling, is cooled by a cooling mechanism (not shown). The pipe 42P (42N) may be considered here as part of the return pipe 110 (111).

When the heat exchangers 4P and 4N form the pressure difference forming mechanism 6H, the pipe 42N of the negative heat exchanger 4N may be made longer than the pipe 42P of the positive heat exchanger 4P as illustrated in the drawing. Thus, for the same reason as in the case of the pressure difference forming mechanism 6A formed by making the lengths of the return pipes 110 and 111 different, the pressure difference state can be created where the pressure of the negative electrolyte acting on the separation membrane 101 is higher than the pressure of the positive electrolyte acting on the separation membrane 101.

Besides, the pressure difference state described above may be created by making the pipe 42N narrower than the pipe 42P, or by bending the pipe 42N at more points than the pipe 42P. The lengths, diameters, and bent states of the pipes may of course be combined to create the pressure difference state described above. The pressure difference state described above may be created by providing only the negative heat exchanger 4N without providing the positive heat exchanger 4P.

### [Other Measures]

The pressure difference state described above may be created by positioning the negative tank 107 illustrated in Fig. 1 higher than the positive tank 106. The pressure difference state described above may be created by routing the negative return pipe 111 at a position higher than the positive return pipe 110.

### [Combinations]

The pressure difference forming mechanisms described above can be used either alone or in combination. For example, combining the configuration where the positive pipeline and the negative pipeline have different lengths with the configuration where the positive pipeline and the negative pipeline have different diameters makes it easier to create a desired pressure difference state. It is preferable that the configuration where the positive pipeline and the negative pipeline have different lengths and diameters be combined with the configuration where the positive pump (positive electrolyte-delivery apparatus) and the negative pump (negative electrolyte-delivery apparatus) differ in the amount of electrolyte delivered therefrom, because this allows fine adjustment of the pressure difference state described above.

### [Additional Remarks]

In the present embodiment including the second pressure difference forming mechanism, the flow paths of the positive and negative electrolytes in the cell stack 2 are the same in configuration. To change the flow paths in the cell stack 2, it is necessary to change the configuration of the cell frames 120 illustrated in Fig. 11. This is because since creating the cell frames 120 requires a mold, it is not easy to modify the cell frames 120. On the other hand, as described above, the second pressure difference forming mechanism of the present embodiment can be easily formed by making the positive electrolyte circulation mechanism 3P and the negative electrolyte circulation mechanism 3N different in configuration.

### (RF Battery Operation Method)

The RF battery 1 for testing is prepared, which includes either one or a combination of the pressure difference forming mechanisms described above. Then, while a pressure on the separation membrane 101 in the RF battery 1 for testing is being monitored, the positive electrolyte and the negative electrolyte are circulated in the cell stack 2. On the basis of the result of the monitoring, the shapes and dimensions of the components of the RF battery 1 are readjusted and the outputs of the pumps 112 and 113 are varied, so as to determine optimum values for the shapes and dimensions of the components and optimum values for the outputs of the pumps 112 and 113. When the RF battery 1 designed on the basis of the optimum values is used, the pressure of the negative electrolyte acting on the separation membrane 101 can be made higher than the pressure of the positive electrolyte acting on the separation membrane 101.

The pressure difference state is preferably one where, over the entire surface of the separation membrane 101, the pressure of the negative electrolyte acting on the separation membrane 101 is higher than the pressure of the positive electrolyte acting on the separation membrane 101. This is because even when the pressure of the negative electrolyte immediately after being discharged from the cell stack is simply higher than the pressure of the positive electrolyte, the pressure of the negative electrolyte acting on the separation membrane may be lower than the pressure of the positive electrolyte acting on the separation membrane at some points on the surface of the separation membrane. With the pressure difference forming mechanisms described above, a pressure difference state can be created where, over the entire surface of the separation membrane 101, the pressure of the negative electrolyte acting on the separation membrane 101 is higher than the pressure of the positive electrolyte acting on the separation membrane 101.

### (Others)

It is preferable to maintain the pressure difference state described above even in the process of stopping the RF battery 1 or stopping the circulation of the electrolytes. For example, to maintain the pressure difference state, the outputs of the pumps 112 and 113 are gradually weakened and then the pumps 112 and 113 are stopped at the same time. Until the pumps 112 and 113 are stopped, the outputs of the pumps 112 and 113 are regulated to make the amount of electrolyte delivered from the negative pump 113 greater than the amount of electrolyte delivered from the positive pump 112. This makes it possible to maintain the pressure difference state until the circulation of the electrolytes is stopped. Alternatively, by gradually weakening the outputs of the pumps 112 and 113 and then stopping the positive pump 112 before stopping the negative pump 113, the pressure difference state can be maintained until the electrolyte circulation is stopped. The latter technique may be restated as a technique that keeps the negative pump 113 moving for a while after the positive pump 112 is stopped.

### Industrial Applicability

The redox flow battery and the redox flow battery operation method according to the present invention can be used not only for stabilizing the output of power generation, storing surplus power, and load leveling in power generation by new energies (e.g., solar and wind energies), but can also be used in dealing with momentary voltage drops and power failures and for load leveling purposes in general power plants. Reference Signs List

1, α: redox flow battery (RF battery)
2: cell stack
100: battery cell
   101: separation membrane
   102: positive portion 103: negative portion
   104: positive electrode 105: negative electrode
3P, 100P: positive electrolyte circulation mechanism
   106: positive tank 108: positive supply pipe
   110: positive return pipe
   112: pump (positive electrolyte-delivery apparatus)
   114: valve on positive supply pipe
   116: valve on positive return pipe
3N, 100N: negative electrolyte circulation mechanism
   107: negative tank 109: negative supply pipe
   111: negative return pipe
   113: pump (negative electrolyte-delivery apparatus)
   115: valve on negative return pipe
   117: valve on negative return pipe
4P: positive heat exchanger
   40P: refrigerant 41P: container 42P: pipe
4N: negative heat exchanger
   40N: refrigerant 41N: container 42N: pipe
5: pump control unit (flow-rate control unit) 6A, 6B, 6C, 6D, 6E, 6F, 6G, 6H: pressure difference forming mechanism 120: cell frame 121: bipolar plate 122: frame body 123, 124: liquid supplying manifold 125, 126: liquid discharging manifold
127: sealing member
190: supply/discharge plate 210, 220: end plate
200: cell stack 200s: sub-stack 230: fastening mechanism

## Claims

1. A redox flow battery comprising:
a cell stack formed by stacking a plurality of battery cells each including a positive electrode, a negative electrode, and a separation membrane;
a positive electrolyte circulation mechanism including a positive tank storing a positive electrolyte, a positive pipeline connecting the positive tank to the cell stack, and a positive electrolyte-delivery apparatus delivering the positive electrolyte to the cell stack; and
a negative electrolyte circulation mechanism including a negative tank storing a negative electrolyte, a negative pipeline connecting the negative tank to the cell stack, and a negative electrolyte-delivery apparatus delivering the negative electrolyte to the cell stack,
wherein the redox flow battery includes a pressure difference forming mechanism that makes one of a pressure loss in the positive pipeline and a pressure loss in the negative pipeline greater than the other so that, when the positive electrolyte and the negative electrolyte are circulated in the cell stack, a pressure difference state is created where there is a difference between a pressure of the positive electrolyte acting on the separation membrane and a pressure of the negative electrolyte acting on the separation membrane.

2. The redox flow battery according to Claim 1, wherein the positive pipeline includes a positive supply pipe supplying the positive electrolyte from the positive tank to the cell stack, and a positive return pipe discharging the positive electrolyte from the cell stack to the positive tank;
the negative pipeline includes a negative supply pipe supplying the negative electrolyte from the negative tank to the cell stack, and a negative return pipe discharging the negative electrolyte from the cell stack to the negative tank; and
one of a pressure loss in the positive return pipe and a pressure loss in the negative return pipe is greater than the other.

3. The redox flow battery according to Claim 1 or 2, wherein one of the positive pipeline and the negative pipeline is longer in length than the other.

4. The redox flow battery according to any one of Claims 1 to 3, wherein one of the positive pipeline and the negative pipeline is smaller in diameter than the other.

5. The redox flow battery according to any one of Claims 1 to 4, wherein one of the positive pipeline and the negative pipeline is bent in a more complex manner than the other.

6. The redox flow battery according to any one of Claims 1 to 5, wherein the positive pipeline and the negative pipeline have respective valves; and
opening of one of the valve on the positive pipeline and the valve on the negative pipeline is narrower than opening of the other.

7. The redox flow battery according to any one of Claims 1 to 6, wherein the pressure difference forming mechanism includes a flow-rate control unit that controls an output from the positive electrolyte-delivery apparatus and an output from the negative electrolyte-delivery apparatus, thereby making one of the amount of electrolyte delivered from the positive electrolyte-delivery apparatus and the amount of electrolyte delivered from the negative electrolyte-delivery apparatus greater than the other.

8. The redox flow battery according to any one of Claims 1 to 7, further comprising a first heat exchanger disposed in one of the positive return pipe and the negative return pipe,
wherein the other of the positive return pipe and the negative return pipe is provided with no heat exchanger, or is provided with a second heat exchanger smaller in pressure loss than the first heat exchanger.
